# DEMANDE DE BREVET EUROPEEN

(11) **EP 3 228 604 A1**
(43) Date de publication de la demande: **11.10.2017**
(21) Numéro de dépôt: 17163428.0
(22) Date de dépôt: 19.03.2012
(51) Int. Cl.: C03C 17/36

(54) **SUBSTRAT TRANSPARENT MUNI D'UN EMPILEMENT DE COUCHES MINCES**

(30) Priorité: 24.03.2011 FR 1152462
(62) Demande divisionnaire de: 12714807.0
(71) Demandeur: Saint-Gobain Glass France, 92400 Courbevoie (FR)
(72) Inventeur: REYMOND, Vincent, 92160 ANTONY (FR); JRIBI, Ramzi, 75012 PARIS (FR)
(74) Mandataire: Saint-Gobain Recherche

(57) **Abrégé**

L'invention concerne un substrat transparent muni d'un empilement de couches minces comprenant une couche métallique à propriétés de réflexion dans l'infrarouge disposée entre deux revêtements diélectriques non métalliques sous-jacent et sus-jacent,
le revêtement sous-jacent comprend :
- au moins une couche à haut indice de réfraction,
- au moins une couche de mouillage à base d'oxyde de zinc, avec laquelle la couche métallique à propriétés de réflexion dans l'infrarouge est en contact direct,
le revêtement diélectrique sus-jacent comprenant la séquence de couches minces déposées dans l'ordre suivant :
- au moins une couche à haut indice de réfraction, l'épaisseur physique de la couche à haut indice de réfraction ou la somme des épaisseurs physiques des couches à haut indice de réfraction étant comprise entre 15 et 40 nm,
- au moins une couche à bas indice de réfraction, l'épaisseur physique de la couche à bas indice de réfraction ou la somme des épaisseurs physiques
des couches à bas indice de réfraction étant comprise entre 40 et 120 nm, la différence d'indice de réfraction entre la ou les couches à haut indice de réfraction et la ou les couche à bas indice de réfraction étant comprise entre 0,7 et 1,2.

## Description

L'invention concerne un substrat transparent, notamment en un matériau rigide minéral comme le verre, revêtu d'un empilement de couches minces comprenant une couche fonctionnelle de type métallique pouvant agir sur le rayonnement solaire et/ou le rayonnement infrarouge de grande longueur d'onde.

L'invention concerne plus particulièrement l'utilisation de tels substrats pour fabriquer des vitrages d'isolation thermique renforcée présentant un facteur solaire élevé, et donc destinés principalement aux climats froids. Ces vitrages sont destinés à équiper plus particulièrement les bâtiments, en vue notamment de diminuer l'effort de chauffage en hiver (vitrages dits « bas-émissifs») et de maximiser l'apport solaire gratuit.

Dans de tels vitrages multiples d'isolation thermique renforcée, des substrats sont maintenus à distance par des espaceurs, de manière à délimiter une cavité remplie par un gaz isolant qui peut être de l'air, de l'Argon ou du Krypton. Un double vitrage est donc composé d'au moins deux substrats, par exemple des feuilles de verre, séparés deux à deux par une lame de gaz. On désigne ainsi par exemple par la séquence 4/12/4 un double vitrage composé de deux feuilles de verre de 4 mm d'épaisseur et d'une lame de gaz de 12 mm et par 4/12/4/12/4 un triple vitrage composé de trois feuilles de verre de 4 mm d'épaisseur et de deux lames de gaz de 12 mm.

De manière conventionnelle, les faces d'un vitrage multiple sont désignées à partir de l'extérieur du bâtiment. Un double vitrage comporte ainsi 4 faces, la face 1 est à l'extérieur du bâtiment, la face 4 à l'intérieur du bâtiment et les faces 2 et 3 à l'intérieur du double vitrage. De même, un triple vitrage comporte 6 faces, la face 1 est à l'extérieur du bâtiment, la face 6 à l'intérieur du bâtiment, les faces 2 et 3 de chaque côté de la première lame de gaz, à l'intérieur du triple vitrage et les faces 4 et 5 de chaque côté de la deuxième lame de gaz, à l'intérieur du triple vitrage.

Ces substrats peuvent par ailleurs être intégrés dans des vitrages présentant en outre des fonctionnalités particulières, comme par exemple des vitrages chauffants ou des vitrages électrochromes.

Un type d'empilement de couches connu pour conférer aux substrats de telles propriétés d'isolation thermique est constitué d'une couche métallique fonctionnelle à propriétés de réflexion dans l'infrarouge et/ou dans le rayonnement solaire, notamment une couche fonctionnelle métallique à base d'argent ou d'alliage métallique contenant de l'argent.

Dans ce type d'empilement, la couche fonctionnelle se trouve ainsi disposée entre deux revêtements antireflets comportant chacun en général plusieurs couches qui sont chacune en un matériau diélectrique du type nitrure et notamment nitrure de silicium ou d'aluminium ou du type oxyde. Du point de vue optique, le but de ces revêtements qui encadrent la couche fonctionnelle métallique est « d'antirefléter » dans le domaine visible cette couche fonctionnelle métallique, pour conserver une transmission élevée dans le domaine visible.

Un revêtement de blocage est parfois intercalé entre un ou chaque revêtement antireflet et la couche métallique fonctionnelle. Le revêtement de blocage disposé sous la couche fonctionnelle en direction du substrat la protège lors d'un éventuel traitement thermique à haute température, du type bombage et/ou trempe et le revêtement de blocage disposé sur la couche fonctionnelle à l'opposé du substrat protège cette couche métallique fonctionnelle d'une éventuelle dégradation lors du dépôt du revêtement antireflet supérieur et lors d'un éventuel traitement thermique à haute température, du type bombage et/ou trempe.

Il est connu d'utiliser deux couches diélectriques d'indice de réfraction proche de 2 (tel que mesuré usuellement à une longueur d'onde de 550 nm), par exemple une couche de nitrure de silicium (Si₃N₄) surmontée d'une couche d'oxyde mixte d'étain et de zinc (SnZnOₓ) au-dessus de la couche fonctionnelle métallique pour antirefléter la couche fonctionnelle métallique.

Toutefois, un triple vitrage muni de tels empilements a un facteur solaire limité et/ou présente une couleur, en particulier en transmission, dans le jaune/vert, qui peut ne pas être jugée suffisamment neutre.

Il y a donc un besoin pour un substrat transparent muni d'un empilement de couches minces, l'empilement de couches minces comprenant une couche métallique à propriétés de réflexion dans l'infrarouge disposée entre deux revêtements diélectriques non métalliques sous-jacent et sus-jacent, qui permette d'augmenter le facteur solaire d'un vitrage multiple équipé du substrat et d'obtenir une coloration acceptable, notamment en transmission, qui soit en particulier moins dans le vert, voire également moins dans le jaune, pour le vitrage multiple.

Pour cela, l'invention propose un substrat transparent, notamment en verre, muni d'un empilement de couches minces tel que défini dans la revendication 1.

L'empilement de couches minces comprend, une couche métallique, de préférence une seule couche métallique, à propriétés de réflexion dans l'infrarouge, notamment bas-émissive, disposée entre deux revêtements diélectriques non métalliques sous-jacent et sus-jacent.

Le revêtement diélectrique sus-jacent comprend au moins la séquence de couches minces déposées dans l'ordre suivant au dessus de la couche métallique à propriétés de réflexion dans l'infrarouge :
- au moins une couche à haut indice de réfraction, en matériau d'indice de réfraction supérieur ou égal à 2,20, l'épaisseur physique de la couche à haut indice de réfraction ou la somme des épaisseurs physiques des couches à haut indice de réfraction étant comprise entre 15 et 40 nm, de préférence entre 20 et 35 nm,
- au moins une couche à bas indice de réfraction, en matériau d'indice de réfraction inférieur ou égal à 1,70, l'épaisseur physique de la couche à bas indice de réfraction ou la somme des épaisseurs physiques des couches à bas indice de réfraction étant comprise entre 40 et 120 nm,
la différence d'indice de réfraction entre la ou les couches à haut indice de réfraction et la ou les couche à bas indice de réfraction étant comprise entre 0,7 et 1,2, de préférence entre 0,8 et 1,1.

Selon une autre particularité, le rapport de l'épaisseur physique de la couche à bas indice de réfraction ou de la somme des épaisseurs physiques des couches à bas indice de réfraction sur l'épaisseur physique de la couche à haut indice de réfraction ou de la somme des épaisseurs physiques des couches à haut indice de réfraction du revêtement diélectrique sus-jacent est compris entre 2,5 et 5,0, de préférence entre 2,5 et 4,0.

Selon une autre particularité, le rapport de l'épaisseur optique totale du revêtement diélectrique sus-jacent sur l'épaisseur optique totale du revêtement sous-jacent est compris entre 1,8 et 2,3, de préférence entre 1,9 et 2,2.

Selon une autre particularité, la couche métallique à propriétés de réflexion dans l'infrarouge est à base d'argent ou d'alliage métallique contenant de l'argent.

Selon une autre particularité, la couche métallique à propriétés de réflexion dans l'infrarouge a une épaisseur physique comprise entre 5 et 20 nm, de préférence entre 5 et 15 nm, et de façon encore préférée entre 5 et 10 nm.

Selon une autre particularité, la(les) couche(s) à haut indice de réfraction du revêtement diélectrique sus-jacent a(ont) de préférence un indice de réfraction strictement supérieur à 2,30, et de façon encore préférée supérieur ou égal à 2,35, et est(sont) à base d'oxyde de titane ou d'oxyde mixte de titane et d'un autre composant choisi dans le groupe constitué par Zn, Zr et Sn, ou à base d'oxyde de zirconium ou à base d'oxyde de niobium ou à base de nitrure mixte de silicium et de zirconium, ou à base de nitrure mixte de silicium, de zirconium et d'aluminium.

Selon une autre particularité, l'épaisseur physique de la couche à bas indice de réfraction du revêtement diélectrique sus-jacent ou la somme des épaisseurs physiques des couches à bas indice de réfraction du revêtement diélectrique sus-jacent est comprise entre 50 et 120 nm, de préférence entre 75 et 120 nm, et de façon encore préférée entre 80 et 110 nm.

Selon une autre particularité, la(les) couche(s) à bas indice de réfraction du revêtement diélectrique sus-jacent est(sont) constituée(s) essentiellement d'oxyde de silicium.

Le revêtement sous-jacent comprend en outre au moins une couche à haut indice de réfraction, en matériau d'indice de réfraction supérieur ou égal à 2,20, de préférence strictement supérieur à 2,30, et de façon encore préférée supérieur ou égal à 2,35. L'épaisseur physique de la couche à haut indice de réfraction ou la somme des épaisseurs physiques des couches à haut indice de réfraction est comprise entre 10 et 40 nm, de préférence entre 15 et 40 nm et de façon encore préférée entre 15 et 30 nm.

Selon une autre particularité, la(les) couche(s) à haut indice de réfraction du revêtement diélectrique sous-jacent est(sont) à base d'oxyde de titane ou d'oxyde mixte de titane et d'un autre composant choisi dans le groupe constitué par Zn, Zr et Sn, ou à base d'oxyde de zirconium ou à base d'oxyde de niobium ou à base de nitrure mixte de silicium et de zirconium, ou à base de nitrure mixte de silicium, de zirconium et d'aluminium.

Selon une autre particularité, le revêtement diélectrique sus-jacent comprend en outre une couche en matériau d'indice de réfraction inférieur ou égal à 2,20 et supérieur ou égal à 1,80 disposée entre la couche métallique à propriétés de réflexion dans l'infrarouge et la couche à haut indice de réfraction du revêtement diélectrique sus-jacent.

Selon une autre particularité, la couche en matériau d'indice de réfraction inférieur ou égal à 2,20 et supérieur ou égal à 1,80 est à base d'oxyde de zinc, de préférence dopé à l'aluminium, ou d'oxyde d'étain ou d'oxyde mixte d'étain et de zinc.

Selon une autre particularité, le substrat transparent comprend en outre une couche de sur-blocage en NiCr ou Ti ou Nb disposée entre la couche métallique à propriétés de réflexion dans l'infrarouge et le revêtement diélectrique sus-jacent, en contact direct avec la couche métallique à propriétés de réflexion dans l'infrarouge.

Le revêtement diélectrique sous-jacent comprend en outre une couche de mouillage à base d'oxyde de zinc, de préférence dopé à l'aluminium, ou d'oxyde d'étain ou d'oxyde mixte d'étain et de zinc, avec laquelle la couche métallique à propriétés de réflexion dans l'infrarouge est en contact direct.

Selon une autre particularité, le revêtement diélectrique sous-jacent comprend en outre comme première couche en contact direct avec le matériau du substrat, une couche d'indice de réfraction compris entre 1,70 et 2,30, de préférence à base de nitrure, notamment en nitrure de silicium dopé à l'aluminium.

L'invention concerne également un vitrage multiple comprenant un nombre total N de substrats, dont N-1 substrats selon l'une quelconque des revendications 1 à 14, N étant supérieur ou égal à 2 et les N substrats étant séparés deux à deux par une lame de gaz, et le ou les empilements de couches minces étant en vis-à-vis d'une lame de gaz.

Selon une autre particularité, au moins un des substrats est un vitrage feuilleté comprenant deux feuilles de verre liées entre elles par un film intercalaire en polymère, par exemple en PVB.

Selon une autre particularité, la face externe du vitrage multiple destinée à être tournée vers l'extérieur d'un bâtiment comprend un revêtement auto-nettoyant et/ou anti-condensation et/ou la face externe du vitrage multiple destinée à être tournée vers l'intérieur d'un bâtiment comprend un revêtement bas-émissif.

Par « revêtement », il faut comprendre au sens de la présente invention qu'il peut y avoir une seule couche ou plusieurs couches de matériaux différents à l'intérieur du revêtement.

Par une couche « en contact direct » avec une autre couche, on entend au sens de l'invention qu'aucune couche n'est interposée entre les deux dites couches.

Les indices de réfractions sont tous mesurés, comme usuellement, à une longueur d'onde de 550 nm.

Par « épaisseur optique », on entend au sens de l'invention, comme habituellement, le produit de l'épaisseur physique (ou réelle) de la couche avec son indice de réfraction mesuré à 550 nm.

Par « épaisseur optique totale » on entend au sens de l'invention la somme de toutes les épaisseurs optiques des couches considérées, chaque épaisseur optique étant, comme expliqué ci-avant, le produit de l'épaisseur physique (ou réelle) de la couche avec son indice de réfraction mesuré à 550 nm.

Ainsi, l'épaisseur optique totale du revêtement antireflet sous-jacent est constituée de la somme de toutes les épaisseurs optiques des couches diélectriques de ce revêtement qui sont disposées entre le substrat et la couche métallique fonctionnelle ou entre le substrat et le revêtement de sous-blocage s'il est présent.

De même, l'épaisseur optique totale du revêtement antireflet sus-jacent est constituée de la somme de toutes épaisseurs optiques des couches diélectriques de ce revêtement qui sont disposées au-dessus de la couche métallique fonctionnelle, à l'opposé du substrat, ou au-dessus du revêtement de sur-blocage s'il est présent.

Le facteur solaire g est défini comme le rapport entre l'énergie entrant dans le local par le vitrage et l'énergie solaire incidente. Il peut être calculé par la somme du flux énergétique transmis directement à travers le vitrage et du flux énergétique absorbé puis réémis vers l'intérieur par le vitrage. Le facteur solaire g, aussi appelé coefficient FS, est mesuré au sens de l'invention selon les conditions décrites dans la norme internationale ISO 9050.

Par « substrat », on entend au sens de la présente invention une feuille de verre unique ou un ensemble de feuilles de verre, notamment deux feuilles de verre, liées entre elle en une structure dite feuilletée par un intercalaire du type polymère, notamment de PVB (polyvinylbutyral), selon les techniques bien connues dans le domaine.

L'invention se rapporte à un substrat transparent, notamment en verre, muni d'un empilement de couches minces. L'empilement de couches minces comprend une couche métallique à propriétés de réflexion dans l'infrarouge, notamment bas-émissive, disposée entre deux revêtements diélectriques non métalliques sous-jacent et sus-jacent. Le revêtement diélectrique sus-jacent comprenant au moins la séquence de couches minces déposées dans l'ordre suivant au dessus de la couche métallique à propriétés de réflexion dans l'infrarouge :
- au moins une couche à haut indice de réfraction, en matériau d'indice de réfraction supérieur ou égal à 2,20, l'épaisseur physique de la couche à haut indice de réfraction ou la somme des épaisseurs physiques des couches à haut indice de réfraction étant comprise entre 15 et 40 nm, de préférence entre 20 et 35 nm,
- au moins une couche à bas indice de réfraction, en matériau d'indice de réfraction inférieur ou égal à 1,70, l'épaisseur physique de la couche à bas indice de réfraction ou la somme des épaisseurs physiques des couches à bas indice de réfraction étant comprise entre 40 et 120 nm, de préférence entre 50 et 110 nm, la différence d'indice de réfraction entre la ou les couches à haut indice de réfraction et la ou les couches à bas indice de réfraction étant comprise entre 0,70 et 1,20, de préférence entre 0,80 et 1,10.

L'ensemble des caractéristiques de l'invention, en particulier le remplacement de deux couches d'indice de réfraction proche de 2 par une ou plusieurs couches à haut indice de réfraction surmontée d'une couche ou plusieurs couches à bas indice de réfraction dans le revêtement diélectrique sus-jacent, permet qu'un vitrage multiple muni d'au moins un substrat selon l'invention ait un facteur solaire augmenté et une couleur en transmission plus neutre. Cela sera illustré plus loin.

Ainsi, l'invention concerne un substrat transparent destiné à être monté dans un vitrage, par exemple un vitrage de bâtiment. Le substrat transparent est de préférence en verre. Il est revêtu d'un empilement de couches minces. Les couches sont déposées les unes au dessus des autres pour former une couche métallique à propriétés de réflexion dans l'infrarouge sandwichée entre deux revêtements diélectriques non métalliques. Il y a une unique couche métallique à propriétés de réflexion dans l'infrarouge.

Les couches minces sont déposées par pulvérisation réactive « magnétron », éventuellement combinée au dépôt PE-CVD (« plasma enhanced - chemical vapour deposition » ; en français : dépôt chimique en phase vapeur assisté par un plasma) pour déposer certaines couches minces plus rapidement, en particulier pour la couche à bas indice de réfraction.

La première couche déposée directement sur le substrat est de préférence une couche d'indice compris entre 1,70 et 2,30, de préférence à base de nitrure, notamment en nitrure de silicium. L'un des rôles de cette couche, en plus de son rôle optique décrit plus haut, est d'améliorer l'adhésion de l'empilement de couches minces sur le matériau du substrat. Cette couche a une épaisseur physique comprise entre 15 et 40 nm, de préférence entre 20 et 40 nm.

La couche métallique à propriétés de réflexion dans l'infrarouge est de préférence à base d'argent ou d'alliage métallique contenant de l'argent. Elle a une épaisseur physique comprise entre 5 et 20 nm, de préférence entre 5 et 15 nm, et de façon encore préférée entre 5 et 10 nm.

Le revêtement diélectrique sus-jacent comprend au moins une couche à haut indice de réfraction, en matériau d'indice de réfraction supérieur ou égal à 2,20, de préférence strictement supérieur à 2,30, et de façon encore préférée supérieur ou égal à 2,35. L'épaisseur physique de la couche à haut indice de réfraction ou la somme des épaisseurs physiques des couches à haut indice de réfraction est comprise entre 15 et 40 nm, de préférence entre 20 et 35 nm. Cette(ces) couche(s) à haut indice de réfraction est(sont) par exemple à base d'oxyde de titane ou d'oxyde mixte de titane et d'un autre composant choisi dans le groupe constitué par Zn, Zr et Sn, ou à base d'oxyde de zirconium ou à base d'oxyde de niobium ou à base de nitrure mixte de silicium et de zirconium, ou à base de nitrure mixte de silicium, de zirconium et d'aluminium.

Le revêtement diélectrique sus-jacent comprend également, au-dessus de la ou des couches à haut indice de réfraction, au moins une couche à bas indice de réfraction, en matériau d'indice de réfraction inférieur ou égal à 1,70. L'épaisseur physique de la couche à bas indice de réfraction ou la somme des épaisseurs physiques des couches à bas indice de réfraction est comprise entre 40 et 120 nm, par exemple entre 50 et 120 nm, de préférence entre 75 et 120 nm, et de façon encore préférée entre 80 et 110 nm. Cette(ces) couche(s) à bas indice de réfraction est(sont) par exemple constituée(s) essentiellement d'oxyde de silicium, c'est-à-dire qu'elle(s) est(sont) constituée(s) à plus de 80% en poids d'oxyde de silicium sur la base de la formulation de l'oxyde simple SiO₂, et éventuellement d'au moins un autre élément de préférence choisi dans le groupe constitué par Al, C, N, B, Sn, Zn et de manière très préférée parmi Al, B ou C. De préférence ladite(lesdites) couche(s) constituée(s) essentiellement d'oxyde de silicium est(sont) constituée(s) à plus de 90% en poids d'oxyde de silicium, sur la base de la formulation de l'oxyde simple SiO₂.

Dans le cas où il y a plusieurs couches à haut indice de réfraction dans le revêtement sus-jacent, les couches à haut indice de réfraction sont de préférence toutes en dessous (en partant du verre) de la ou des couches à bas indice de réfraction et les couches à haut indice de réfraction sont de préférence toutes en contact direct les unes avec les autres. Toutefois, si elles ne sont pas en contact direct les unes avec les autres, elles sont séparées par une couche dont l'indice de réfraction n'est ni inférieur ou égal à 1,70 ni supérieur ou égal à 2,20, l'épaisseur physique de cette (de chacune de ces) couche(s) de séparation étant inférieure ou égale à 30 nm, de préférence inférieure ou égale à 20 nm.

De même, dans le cas où il y a plusieurs couches à bas indice de réfraction dans le revêtement sus-jacent, les couches à bas indice de réfraction sont de préférence toutes au-dessus (en partant du verre) de la ou des couches à haut indice de réfraction et les couches à bas indice de réfraction sont de préférence toutes en contact direct les unes avec les autres. Toutefois, si elles ne sont pas en contact direct les unes avec les autres, elles sont séparées par une couche dont l'indice de réfraction n'est ni inférieur ou égal à 1,70 ni supérieur ou égal à 2,20, l'épaisseur physique de cette (de chacune de ces) couche(s) de séparation étant inférieure ou égale à 30 nm, de préférence inférieure ou égale à 20 nm.

La couche ou le groupe de couches à haut indice de réfraction du revêtement diélectrique sus-jacent peut être séparé de la couche ou du groupe de couches à bas indice de réfraction du revêtement diélectrique sus-jacent par une ou plusieurs autres couches. Toutefois, de préférence, les couches ou groupes de couches sont en contact direct. Dans le cas où les couches ou groupes de couches ne sont pas en contact direct, les couches ou groupes de couches sont séparé(e)s par une couche dont l'indice de réfraction n'est ni inférieur ou égal à 1,70 ni supérieur ou égal à 2,20, l'épaisseur physique de cette couche de séparation étant inférieure ou égale à 30 nm, de préférence inférieure ou égale à 20 nm.

Le revêtement diélectrique sus-jacent comprend de façon optionnelle une couche en matériau d'indice de réfraction inférieur ou égal à 2,20 et supérieur ou égal à 1,80, disposée entre la couche métallique à propriétés de réflexion dans l'infrarouge et la couche haut indice de réfraction du revêtement diélectrique sus-jacent. La couche en matériau d'indice de réfraction inférieur à 2,20 et supérieur ou égal à 1,80 est de préférence à base d'oxyde de zinc, d'oxyde d'étain ou d'oxyde mixte d'étain et de zinc. La couche en matériau d'indice de réfraction inférieur ou égal à 2,20 et supérieur ou égal à 1,80 a une épaisseur physique comprise entre 4 et 15 nm.

L'empilement de couches minces comprend de préférence également une couche de blocage en NiCr ou Ti ou Nb (éventuellement partiellement ou totalement oxydé) disposée entre la couche métallique à propriétés de réflexion dans l'infrarouge et le revêtement diélectrique sus-jacent, en contact direct avec la couche métallique à propriétés de réflexion dans l'infrarouge, pour protéger la couche métallique fonctionnelle d'une éventuelle dégradation lors du dépôt du revêtement antireflet sus-jacent et lors d'un éventuel traitement thermique à haute température, du type bombage et/ou trempe. La couche de blocage a une épaisseur physique inférieure ou égale à 2 nm.

Le revêtement diélectrique sous-jacent comprend de préférence, au-dessus de la première couche le cas échéant, au moins une couche à haut indice de réfraction, en matériau d'indice de réfraction supérieur ou égal à 2,20, de préférence strictement supérieur à 2,30, et de façon encore préférée supérieur ou égal à 2,35. L'épaisseur physique de la couche à haut indice de réfraction ou la somme des épaisseurs physiques des couches à haut indice de réfraction située(s) dans le revêtement sous-jacent est comprise entre 10 et 40 nm, de préférence entre 15 et 40 nm, et de façon encore préférée entre 15 et 30 nm. Cette(ces) couche(s) à haut indice de réfraction permet(tent) d'antirefléter au mieux la couche fonctionnelle métallique. La(Les) couche à haut indice de réfraction du revêtement diélectrique sous-jacent est(sont) en oxyde de titane ou d'oxyde mixte de titane et d'un autre composant choisi dans le groupe constitué par Zn, Zr et Sn, ou à base d'oxyde de zirconium ou à base d'oxyde de niobium ou à base de nitrure mixte de silicium et de zirconium, ou à base de nitrure mixte de silicium, de zirconium et d'aluminium.

Dans le cas où il y a plusieurs couches à haut indice de réfraction dans le revêtement sous-jacent, les couches à haut indice de réfraction sont de préférence toutes en contact direct les unes avec les autres. Toutefois, si elles ne sont pas en contact direct les unes avec les autres, elles sont séparées par une couche dont l'indice de réfraction n'est ni inférieur ou égal à 1,70 ni supérieur ou égal à 2,20, l'épaisseur physique de cette couche (chacune de ces couches) de séparation étant inférieure ou égale à 30 nm, de préférence inférieure ou égale à 20 nm.

Le revêtement diélectrique sous-jacent comprend également, de préférence, une couche de mouillage à base d'oxyde de zinc, de préférence dopé à l'aluminium, ou d'oxyde d'étain ou d'oxyde mixte d'étain et de zinc avec laquelle la couche métallique à propriétés de réflexion dans l'infrarouge est en contact direct. Cette couche de mouillage permet une bonne adhérence de la couche métallique à propriétés de réflexion dans l'infrarouge sur le revêtement diélectrique sous-jacent et surtout une cristallisation optimale de cette couche métallique à propriétés de réflexion dans l'infrarouge, permettant ainsi d'atteindre une conductivité élevée et une faible émissivité.

Les couches à haut indice de réfraction des revêtements diélectriques sus-jacent et sous-jacent peuvent ne pas être strictement stoechiométriques et être sous ou sur-stoechiométriques en oxygène (s'il s'agit d'oxydes) ou en azote (s'il s'agit de nitrures).

De plus, la différence d'indice de réfraction entre la ou les couches à haut indice de réfraction et la ou les couches à bas indice de réfraction du revêtement du revêtement diélectrique sus-jacent est comprise entre 0,70 et 1,20, de préférence entre 0,80 et 1,10.

Pour obtenir un facteur solaire élevé et des couleurs neutres en transmission, il est intéressant que le rapport E de l'épaisseur physique de la couche à bas indice de réfraction ou de la somme des épaisseurs physiques des couches à bas indice de réfraction sur l'épaisseur physique de la couche à haut indice de réfraction ou de la somme des épaisseurs physiques des couches à haut indice de réfraction du revêtement diélectrique sus-jacent soit compris entre 2,5 et 5,0, de préférence entre 2,5 et 4,0. Les inventeurs ont mis en évidence que, lorsque E est compris entre 3,0 et 5,0, la couleur en transmission est plus neutre. Les inventeurs ont également montré que le facteur solaire est maximum lorsque le rapport E est compris entre 2,2 et 4,0.

Pour obtenir un facteur solaire élevé et des couleurs neutres en transmission, il est également intéressant que le rapport F de l'épaisseur optique totale du revêtement diélectrique sus-jacent sur l'épaisseur optique totale du revêtement diélectrique sous-jacent soit compris entre 1,8 et 2,3, de préférence entre 1,9 et 2,2.

Les inventeurs ont réalisé des dépôts de couches minces sur des substrats en verre sodo-calcique clair d'une épaisseur de 4 mm, commercialisé sous la référence PLANILUX® par la société déposante. Les empilements de couches minces ont été positionnés respectivement en faces 2 et 5 d'un triple vitrage, c'est-à-dire sur les faces internes des feuilles de verre externes. Chacun des triples vitrages comprend ainsi deux feuilles de verre externes munies d'un empilement de couches minces en faces 2 et 5 et une feuille de verre centrale nue. L'empilement de couches minces est identique en faces 2 et 5. Tous les triple vitrages assemblés selon les exemples 1 à 4 présentent la configuration : 4-12 (Ar 90%)-4-12 (Ar 90%)-4, c'est-à-dire qu'ils sont constitués de trois feuilles de verre Planilux® transparentes de 4 mm séparées deux à deux par une lame de gaz intermédiaire comprenant 90 % d'argon et 10 % d'air, d'une épaisseur de 12 mm, le tout étant maintenu ensemble par une structure de châssis et des espaceurs.

Le tableau 1 ci-dessous résume les conditions générales de dépôt par pulvérisation magnétron des différentes couches des exemples 1 à 4 :

**Tableau 1 (wt = « weight »)**

| Couche | Cible employée | Pression de dépôt | Gaz |
|---|---|---|---|
| Si₃N₄ | Si:Al à 92:8 % wt | 1,5.10⁻³ mbar | Ar /(Ar + N₂) à 45 % |
| TiO₂ | TiOₓ avec x de l'ordre de 1,9 | 1,5.10⁻³ mbar | Ar /(Ar + O₂) à 95 % |
| SnZnSbOₓ | SnZn:Sb à 34:65:1 wt | 2.10⁻³ mbar | Ar /(Ar + O₂) à 58 % |
| ZnO | Zn:Al à 98:2 % wt | 2.10⁻³ mbar | Ar /(Ar + O₂) à 52 % |
| NiCr | NiCr 80 :20 % wt | 2.10⁻³ mbar | Ar à 100% |
| Ag | Ag | 4.10⁻³ mbar | Ar à 100 % |
| SiO₂ | Si:Al à 92:8 % wt | 2.10⁻³ mbar | Ar /(Ar + O₂) à 70 % |

Le triple vitrage N°1 comprend deux feuilles de verre munies d'un empilement de couches minces connu de l'art antérieur, tandis que les triples vitrages N°2, N°3 et N°4 comprennent comme feuilles de verre deux substrats selon l'invention.

Le tableau 2 montre, pour chaque exemple, la composition, l'ordre et l'épaisseur physique des couches minces de l'empilement de chaque feuille de verre, ainsi que l'indice de réfraction à 550 nm des matériaux diélectriques. La notation « :AI » à droite d'un composé signifie que ledit composé est dopé à l'aluminium.

**Tableau 2**

| Composition | Indice de réfraction | **N°1** | **N°2** | **N°3** | **N°4** |
|---|---|---|---|---|---|
| **SiO₂:Al** | **1,48** | **0** | **85 nm** | **100 nm** | **109,5 nm** |
| ZnSnOₓ | 2,00 | 3 nm | 0 | 0 | 0 |
| Si₃N₄:Al | 2,05 | 46,5 nm | 0 | 0 | 0 |
| **TiO₂** | **2,40** | **0** | **29** nm | **27** nm | **28** nm |
| ZnO:Al | 1,90 | 5 nm | 5 nm | 5 nm | 5 nm |
| NiCr | | 0,5 nm | 0,5 nm | 0,5 nm | 0,5 nm |
| Ag | | 6,6 nm | 6,6 nm | 6,6 nm | 6,6 nm |
| ZnO:Al | 1,90 | 5 nm | 5 nm | 5 nm | 5 nm |
| **TiO₂** | **2,40** | **16** nm | **20** nm | **20** nm | **23,5** nm |
| Si₃N₄:Al | 2,05 | 25 nm | 25 nm | 25 nm | 23,5 nm |
| Verre | | 4 nm | 4 nm | 4 nm | 4 nm |

Le tableau 3 montre que les substrats des triples vitrages N°2, N°3 et N°4 sont bien selon l'invention, c'est-à-dire qu'ils satisfont bien aux différentes conditions définies plus haut.

Ainsi, d'après le tableau 3, la différence d'indice de réfraction entre la couche à haut indice de réfraction et la couche à bas indice de réfraction, égale à 0,95, est bien comprise entre 0,70 et 1,20, de préférence entre 0,80 et 1,10 pour le substrat selon l'invention, contrairement à la feuille de verre munie d'un empilement connu dans l'art antérieur pour lequel cette différence est nulle, cet empilement ne comportant pas de couche à haut indice de réfraction, ni de couche à bas indice de réfraction.

De même, d'après le tableau 3, le rapport E de l'épaisseur physique de la couche à bas indice de réfraction sur l'épaisseur physique de la couche à haut indice de réfraction du revêtement diélectrique sus-jacent est compris entre 2,5 et 5,0, de préférence entre 2,5 et 4,0.

**Tableau 3**

| N°du triple vitrage | **N°1** | **N°2** | **N°3** | **N°4** |
|---|---|---|---|---|
| Différence d'indice haut/bas | 0 | 0,95 | 0,95 | 0,95 |
| E | / | 2,9 | 3,7 | 3,9 |
| F | 1,1 | 1,9 | 2,0 | 2,1 |

Enfin, le rapport F de l'épaisseur optique totale du revêtement diélectrique sus-jacent sur l'épaisseur optique totale du revêtement sous-jacent est compris entre 1,8 et 2,3, de préférence entre 1,9 et 2,2, contrairement à la feuille de verre munie d'un empilement connu dans l'art antérieur pour lequel ce rapport F est de 1,1.

Le tableau 4 montre que les conditions définies plus haut permettent de répondre au but de l'invention qui est d'augmenter le facteur solaire et de rendre la couleur en transmission d'un triple vitrage plus neutre. Les facteurs a*T et b*T sont caractéristiques de la couleur en transmission. Les couleurs en transmission sont mesurées dans le système LAB selon l'illuminant D65 à 2°. Plus a*T et b*T sont proches de zéro, plus la couleur est neutre. Le tableau 4 mentionne également les facteurs a*R et b*R, caractéristiques de la couleur en réflexion du triple vitrage, sous un angle de 0° et de 60°. Les couleur s en réflexion sont également mesurées dans le système LAB selon l'illuminant D65 à 2°.

Le tableau 4 montre que, par rapport au triple vitrage N°1, les trois triples vitrages N°2, et N°4 ont un facteur solaire qui est augmenté significativement.

De plus, les trois triples vitrages N°2, et N°4 ont un facteur a*T amélioré par rapport au triple vitrage N°1, et même forte ment amélioré pour les triples vitrages N°3 et N°4, d'où une composante verte moin s marquée pour la couleur en transmission Le triple vitrage N°2 a un facteur b*T légèrement dégradé par rapport au triple vitrage N°1. Le triple vitrage N°3 a un facteur b*T équivalent par rapport au triple vitrage N°1. Et le triple vitrage N°4 a un facteur b*T fortement amélioré par rapport au triple vitrage N°1, d'où un e composante jaune moins marquée pour la couleur en transmission.

**Tableau 4**

| N°du triple vitrage | **N°1** | **N°2** | **N°3** | **N°4** |
|---|---|---|---|---|
| Facteur solaire g (%) | 60,3 | 63,8 | 63,2 | 62,6 |
| a*T | -3,8 | -3,4 | -2,3 | -1,0 |
| b*T | 2,4 | 2,9 | 2,5 | 0,9 |
| a*R 0° | 0,0 | -0,7 | -3,9 | -8,1 |
| b*R 0° | -2,8 | -3,7 | -3,3 | 0,9 |
| a*R 60° | 0,3 | -1,3 | -4,6 | -8,2 |
| b*R 60° | -3,1 | -3,3 | -2,6 | 1,8 |

Le triple vitrage N°2 est celui des trois triples vitrages testés qui a le facteur solaire maximal mais sans amélioration de la couleur en transmission. Le triple vitrage N°4 est celui des trois triples vitrages te stés qui a les couleurs les plus neutres en transmission et un bon facteur solaire. Toutefois, le triple vitrage N°4 a une couleur en réflexion sous un angle de 60°nette ment dégradée.

Il y a donc un compromis à trouver entre l'augmentation du facteur solaire et des couleurs plus neutres en transmission. Ainsi, le triple vitrage N°3 donne à la fois des bons résultats pour la couleur en transmission et de très bons résultats pour le facteur solaire, tout en limitant la dégradation de la couleur en réflexion, qui reste neutre.

L'invention concerne également un vitrage multiple comprenant N substrats, notamment en verre, N étant supérieur ou égal à 2. N-1 substrats sont des substrats selon l'invention et un substrat est nu ou recouvert d'un autre revêtement, tel que par exemple un revêtement autonettoyant. Un revêtement autonettoyant et/ou anticondensation peut aussi être présent sur la face opposée de l'un des N-1 substrats selon l'invention et sur une face externe du vitrage multiple, tournée vers l'intérieur ou l'extérieur du bâtiment.

Les substrats sont séparés deux à deux par une lame de gaz. Le ou les empilements de couches minces des substrats sont en vis-à-vis d'une lame de gaz, par exemple en faces 2 et 5 pour un triple vitrage.

Un des substrats peut par exemple être constitué d'un vitrage feuilleté comprenant deux feuilles de verre liées entre elles par un film intercalaire en polymère tel que du PVB.

La face externe du vitrage multiple destinée à être tournée vers l'extérieur d'un bâtiment (face 1) peut comprendre un revêtement auto-nettoyant et/ou anti-condensation. De même, la face externe du vitrage multiple destinée à être tournée vers l'intérieur d'un bâtiment (face 4 d'un double vitrage ou face 6 d'un triple vitrage) peut comprendre un revêtement bas-émissif. En variante, le vitrage peut multiple peut comporter à la fois un revêtement auto-nettoyant et/ou anti-condensation en face 1 et un revêtement bas-émissif sur sa face externe destinée à être tournée vers l'intérieur d'un bâtiment.

## Revendications

1. Substrat transparent, notamment en verre, muni d'un empilement de couches minces, l'empilement de couches minces comprenant une couche métallique à propriétés de réflexion dans l'infrarouge, notamment bas-émissive, et deux revêtements diélectriques non métalliques sous-jacent et sus-jacent, la couche métallique à propriétés de réflexion dans l'infrarouge est disposée entre les deux revêtements diélectriques non métalliques sous-jacent et sus-jacent, et
le revêtement sous-jacent comprend :
- au moins une couche à haut indice de réfraction, en matériau d'indice de réfraction supérieur ou égal à 2,20,
- au moins une couche de mouillage à base d'oxyde de zinc, de préférence dopé à l'aluminium, ou d'oxyde d'étain ou d'oxyde mixte d'étain et de zinc, avec laquelle la couche métallique à propriétés de réflexion dans l'infrarouge est en contact direct,
le revêtement diélectrique sus-jacent comprenant au moins la séquence de couches minces déposées dans l'ordre suivant au-dessus de la couche métallique à propriétés de réflexion dans l'infrarouge :
- au moins une couche à haut indice de réfraction, en matériau d'indice de réfraction supérieur ou égal à 2,20, l'épaisseur physique de la couche à haut indice de réfraction ou la somme des épaisseurs physiques des couches à haut indice de réfraction étant comprise entre 15 et 40 nm, de préférence entre 20 et 35 nm,
- au moins une couche à bas indice de réfraction, en matériau d'indice de réfraction inférieur ou égal à 1,70, l'épaisseur physique de la couche à bas indice de réfraction ou la somme des épaisseurs physiques des couches à bas indice de réfraction étant comprise entre 40 et 120 nm,
la différence d'indice de réfraction entre la ou les couches à haut indice de réfraction et la ou les couche à bas indice de réfraction étant comprise entre 0,7 et 1,2, de préférence entre 0,8 et 1,1.

2. Substrat transparent selon la revendication 1, dans lequel le rapport de l'épaisseur physique de la couche à bas indice de réfraction ou de la somme des épaisseurs physiques des couches à bas indice de réfraction sur l'épaisseur physique de la couche à haut indice de réfraction ou de la somme des épaisseurs physiques des couches à haut indice de réfraction du revêtement diélectrique sus-jacent est compris entre 2,5 et 5,0, de préférence entre 2,5 et 4,0.

3. Substrat transparent selon la revendication 1 ou 2, dans lequel le rapport de l'épaisseur optique totale du revêtement diélectrique sus-jacent sur l'épaisseur optique totale du revêtement sous-jacent est compris entre 1,8 et 2,3, de préférence entre 1,9 et 2,2.

4. Substrat transparent selon l'une des revendications 1 à 3, dans lequel la couche métallique à propriétés de réflexion dans l'infrarouge est à base d'argent ou d'alliage métallique contenant de l'argent.

5. Substrat transparent selon l'une des revendications 1 à 4, dans lequel la couche métallique à propriétés de réflexion dans l'infrarouge a une épaisseur physique comprise entre 5 et 20 nm, de préférence entre 5 et 15 nm, et de façon encore préférée entre 5 et 10 nm.

6. Substrat transparent selon l'une des revendications 1 à 5, dans lequel la(les) couche(s) à haut indice de réfraction du revêtement diélectrique sus-jacent a(ont) de préférence un indice de réfraction strictement supérieur à 2,30, et de façon encore préférée supérieur ou égal à 2,35, et est(sont) à base d'oxyde de titane ou d'oxyde mixte de titane et d'un autre composant choisi dans le groupe constitué par Zn, Zr et Sn, ou à base d'oxyde de zirconium ou à base d'oxyde de niobium ou à base de nitrure mixte de silicium et de zirconium, ou à base de nitrure mixte de silicium, de zirconium et d'aluminium.

7. Substrat transparent selon l'une des revendications 1 à 6, dans lequel l'épaisseur physique de la couche à bas indice de réfraction du revêtement diélectrique sus-jacent ou la somme des épaisseurs physiques des couches à bas indice de réfraction du revêtement diélectrique sus-jacent est comprise entre 50 et 120 nm, de préférence entre 75 et 120 nm, et de façon encore préférée entre 80 et 110 nm.

8. Substrat transparent selon l'une des revendications 1 à 7, dans lequel la(les) couche(s) à bas indice de réfraction du revêtement diélectrique sus-jacent est(sont) constituée(s) essentiellement d'oxyde de silicium.

9. Substrat transparent selon l'une des revendications 1 à 8, dans lequel le revêtement sous-jacent comprend au moins une couche à haut indice de réfraction, en matériau d'indice de réfraction strictement supérieur à 2,30, et de façon encore préférée supérieur ou égal à 2,35.

10. Substrat transparent selon l'une des revendications 1 à 9, dans lequel l'épaisseur physique de la couche à haut indice de réfraction ou la somme des épaisseurs physiques des couches à haut indice de réfraction du revêtement sous-jacent est comprise entre 10 et 40 nm, de préférence entre 15 et 40 nm, et de façon encore préférée entre 15 et 30 nm.

11. Substrat transparent selon l'une des revendications 1 à 10, dans lequel la(les) couche(s) à haut indice de réfraction du revêtement diélectrique sous-jacent est(sont) à base d'oxyde de titane ou d'oxyde mixte de titane et d'un autre composant choisi dans le groupe constitué par Zn, Zr et Sn, ou à base d'oxyde de zirconium ou à base d'oxyde de niobium ou à base de nitrure mixte de silicium et de zirconium, ou à base de nitrure mixte de silicium, de zirconium et d'aluminium.

12. Substrat transparent selon l'une des revendications 1 à 11, dans lequel le revêtement diélectrique sus-jacent comprend en outre une couche en matériau d'indice de réfraction inférieur ou égal à 2,20 et supérieur ou égal à 1,80 disposée entre la couche métallique à propriétés de réflexion dans l'infrarouge et la couche à haut indice de réfraction du revêtement diélectrique sus-jacent.

13. Substrat transparent selon la revendication 12, dans lequel la couche en matériau d'indice de réfraction inférieur ou égal à 2,20 et supérieur ou égal à 1,80 est à base d'oxyde de zinc, de préférence dopé à l'aluminium, ou d'oxyde d'étain ou d'oxyde mixte d'étain et de zinc.

14. Substrat transparent selon la revendication 12 ou 13, comprenant en outre une couche de sur-blocage en NiCr ou Ti ou Nb disposée entre la couche métallique à propriétés de réflexion dans l'infrarouge et le revêtement diélectrique sus-jacent, en contact direct avec la couche métallique à propriétés de réflexion dans l'infrarouge.

15. Substrat transparent selon l'une quelconque des revendications 1 à 14, dans lequel le revêtement diélectrique sous-jacent comprend en outre, comme première couche en contact direct avec le matériau du substrat, une couche d'indice de réfraction compris entre 1,70 et 2,30, de préférence à base de nitrure, notamment en nitrure de silicium dopé à l'aluminium.

16. Vitrage multiple comprenant un nombre total N de substrats, dont N-1 substrats selon l'une quelconque des revendications 1 à 15, N étant supérieur ou égal à 2 et les N substrats étant séparés deux à deux par une lame de gaz, et le ou les empilements de couches minces étant en vis-à-vis d'une lame de gaz.

17. Vitrage multiple selon la revendication 16, dans lequel au moins un des substrats est un vitrage feuilleté comprenant deux feuilles de verre liées entre elles par un film intercalaire en polymère, par exemple en PVB.

18. Vitrage multiple selon la revendication 16 ou 17, dans lequel sa face externe destinée à être tournée vers l'extérieur d'un bâtiment comprend un revêtement autonettoyant et/ou anti-condensation et/ou sa face externe destinée à être tournée vers l'intérieur d'un bâtiment comprend un revêtement bas-émissif.
